# EUROPÄISCHE PATENTANMELDUNG

(11) **EP 4 230 026 A1**
(43) Veröffentlichungstag der Anmeldung: **23.08.2023**
(21) Anmeldenummer: 23153756.4
(22) Anmeldetag: 27.01.2023
(51) Int. Cl.: A01F 25/20, A01F 29/00

(54) **ANORDNUNG UND VERFAHREN ZUR BEFÜLLUNG EINES FUTTERMISCHWAGENS**

(30) Priorität: 21.02.2022 DE 102022104049
(71) Anmelder: Deere & Company, Moline, IL 61265 (US)
(72) Erfinder: PATIL, RUPALI, 68163 Mannheim (DE); ANDERSON, NOEL W, 68163 Mannheim (DE); DOLD, MATTHEW, 68163 Mannheim (DE); BUECHNER, BENJAMIN, 68163 Mannheim (DE); MEYER, MATTHIAS, 68163 Mannheim (DE)
(74) Vertreter: Holst, Sönke

(57) **Zusammenfassung**

Eine Anordnung und ein Verfahren zur Befüllung eines Futtermischwagens umfassen eine Futteraufnahmeeinrichtung (32) zum Aufnehmen von Futter von einem Vorrat (34), Futterbearbeitungsmittel zum Bearbeiten des Futters und Mittel zum Leiten des bearbeiteten Futters in einen Behälter (72) eines Futtermischwagens (14). Der Bearbeitungsgrad der Futterbearbeitungsmittel ist durch eine Steuerung (86) anhand einer vorgebbaren Rezeptur kontrollierbar.

## Beschreibung

Die vorliegende Erfindung bezieht sich auf eine Anordnung zur Befüllung eines Futtermischwagens, mit einer Futteraufnahmeeinrichtung zum Aufnehmen von Futter von einem Vorrat, Futterbearbeitungsmitteln zum Bearbeiten des Futters und Mitteln zum Leiten des bearbeiteten Futters in einen Behälter eines Futtermischwagens, sowie ein entsprechendes Verfahren.

### Stand der Technik

In der Landwirtschaft wird in heutigen Zeiten nicht nur der Anbau von Pflanzen und deren Ernte mit hochtechnisierten Mitteln durchgeführt, sondern auch die Bereitstellung von Futter für Nutztiere. Hierzu finden so genannte Futtermischwagen Verwendung, die einen üblicherweise nach oben offenen Behälter umfassen, in den nacheinander verschiedene Bestandteile des Futters eingefüllt werden. Innerhalb des Behälters ist eine Mischeinrichtung angeordnet, in der Regel in Form einer konischen Schnecke, die einerseits zum Durchmischen, andererseits in einem gewissen Maße auch zum Zerkleinern des Futters dient. Hierzu sei beispielsweise auf die Offenbarung der DE 20 2016 106 837 U1 verwiesen. Der Futtermischwagen wird nach dem Beladen und dem Mischen und Zerkleinern des Futters zum Standort oder Fütterungsplatz der Nutztiere verbracht, wo das Futter entladen wird. Die Beladung des gezogenen oder selbstfahrenden Futtermischwagens erfolgt durch eine Ladeeinrichtung, die z.B. als Ladeschaufel eines Frontladers an einem Ackerschlepper oder Radlader (EP 2 204 088 A1) oder als Silofräse mit Gebläse und Auswurfkrümmer (DE 2 225 783 A) getrennt vom Futtermischwagen ausgeführt sein kann, oder die fest mit dem Futtermischwagen gekoppelt ist (EP 1 563 725 A1, EP 1 577 663 A1, WO 2005/067704 A1, DE 10 2010 033 888 A1).

Im Stand der Technik erfolgt eine automatisch oder halbautomatisch (d.h. mit Anweisungen an einen Bediener) durchgeführte Beladung des Futtermischwagens, d.h. die Inhaltsstoffgehalte des jeweiligen, an einer zugehörigen Lagerstelle aus einem Vorrat entnommenen Bestandteils des Futters werden sensorisch erfasst, insbesondere mittels eines Nahinfrarot- (NIR-) Spektrometers, und abhängig vom Inhaltsstoffgehalt und einer vorgegebenen Rezeptur für die Inhaltsstoffe des Futters wird eine vorgegebene Menge (Masse) des Bestandteils aus dem Vorrat entnommen und in den Futtermischwagen eingefüllt (EP 1 563 725 A1, EP 1 577 663 A1, WO 2005/067704 A1, DE 10 2010 033 888 A1).

Die Nachzerkleinerung und Durchmischung des Futters erfolgt, wie oben bereits erwähnt, durch die Mischeinrichtung des Futtermischwagens, wobei ein Durchmischungs- bzw. Zerkleinerungsgrad des Futters sensorisch erkannt und bei Erreichen eines Sollwerts der Mischvorgang selbsttätig abgebrochen werden kann (DE 20 2016 106 837 U1, EP 3 574 750 A1). Man verlässt sich somit allein auf die Zerkleinerungswirkung des Futtermischwagens, um eine ernährungsphysiologisch sinnvolle Zerkleinerung (nicht jedoch Pulverisierung) des Futters zu erreichen, während bei der Entnahme des Futters aus dem Vorrat allenfalls eine gewisse Vor-Zerkleinerung stattfindet, insbesondere beim Entnehmen des Futters von einem Silagestock mit einem Schneidschild mit Reißzähnen (DE 196 54 725 A1) oder einer Fräseinrichtung (DE 42 20 005 A1), wobei jedoch keinerlei Kontrolle oder Dosierung der Vor-Zerkleinerung möglich ist. Die im Wesentlichen alleinige Zerkleinerung des Futters durch den Futtermischwagen hat jedoch den Nachteil, dass manche Bestandteile stärker zerkleinert werden als nötig, was energetische und ernährungsphysiologische Nachteile hat, und/oder andere Bestandteile weniger weit zerkleinert werden als wünschenswert wäre.

### Aufgabe

Es ist eine Aufgabe der vorliegenden Erfindung, eine gegenüber dem Stand der Technik verbesserte Anordnung und entsprechendes Verfahren zur Befüllung eines Futtermischwagens und ein entsprechendes Verfahren bereitzustellen, bei dem die oben erwähnten Nachteile nicht oder in einem verminderten Maße vorliegen.

### Lösung

Diese Aufgabe wird durch die Lehren der Ansprüche 1 und 10 gelöst, wobei die untergeordneten Ansprüche vorteilhafte Ausführungsformen beschreiben.

Eine Anordnung und zugehöriges Verfahren zur Befüllung eines Futtermischwagens ist mit einer Futteraufnahmeeinrichtung zum Aufnehmen von Futter von einem Vorrat, Futterbearbeitungsmitteln zum Bearbeiten des Futters und Mitteln zum Leiten des bearbeiteten Futters in einen Behälter eines Futtermischwagens ausgestattet. Der Bearbeitungsgrad der Futterbearbeitungsmittel ist durch eine Steuerung anhand einer vorgebbaren Rezeptur kontrollierbar.

Mit anderen Worten wird nicht nur die Menge (Masse) des von einem jeweiligen Vorrat aufgenommenen Futters und/oder seine(r) Inhaltsstoffe durch eine Rezeptur elektronisch an eine Steuerung vorgegeben und von dieser selbsttätig kontrolliert, sondern auch ein Bearbeitungsgrad, mit dem das aus dem Vorrat entnommene Futter vor dem Einfüllen in den Futtermischwagen bearbeitet wird. Auf diese Weise erhält man die Möglichkeit, einen Bearbeitungsgrad des Futters in der Rezeptur vorzugeben, sodass man nicht allein auf die Bearbeitung im Futtermischwagen angewiesen ist und die Bearbeitung an den jeweiligen Vorrat und das zugehörige Futter anpassen kann.

Die Rezeptur kann einen Arbeitsparameter der Futterbearbeitungsmittel und/oder ein zu erreichendes Ergebnis definieren, das mit einer Sensoranordnung erfassbar und durch die Steuerung zur Ansteuerung des Futterbearbeitungsmittels verwendbar ist. Die Sensoranordnung kann eine Kamera und/oder einen Sensor zur Erfassung der Inhaltsstoffe des Futters umfassen.

Die Futterbearbeitungsmittel können eine oder mehrere folgender Einrichtungen umfassen: Vorpresswalzen, eine Schneideinrichtung, eine Nachschneideeinrichtung sowie eine auf beliebiger mechanische Einwirkung wie Stoß und/oder Reibung beruhende (Nach-) Bearbeitungs- oder -zerkleinerungseinrichtung, insbesondere mit einem Paar von Walzen, zwischen denen das Futter hindurchgefördert wird oder mit einer Hammermühle.

Die Steuerung kann konfiguriert sein, die Fördergeschwindigkeit der Futteraufnahmeeinrichtung, kurz bevor eine von der Rezeptur vorgegebene Menge des Futters in den Behälter geladen wurde, zu vermindern, um zu verhindern, dass die gewünschte Menge überschritten wird.

Die Anordnung kann als selbstfahrendes Fahrzeug mit oder ohne Behälter für das Futter oder als an einem Fahrzeug anbringbares Gerät ausgeführt sein.

Die Steuerung kann konfiguriert sein, die Mittel zum Leiten des bearbeiteten Futters in den Behälter des Futtermischwagens selbsttätig anhand der Signale einer Kamera und/oder von Positionsbestimmungseinrichtungen anzusteuern.

### Ausführungsbeispiel

Diese und andere Aufgaben, Merkmale und Vorteile der vorliegenden Erfindung werden dem Fachmann nach dem Lesen der folgenden detaillierten Beschreibung und angesichts der Zeichnungen offensichtlich.
Fig. 1 ist eine Seitenansicht einer Anordnung zur Befüllung eines Futtermischwagens.
Fig. 2 ist ein Flussdiagramm zur Vorgehensweise der Anordnung.

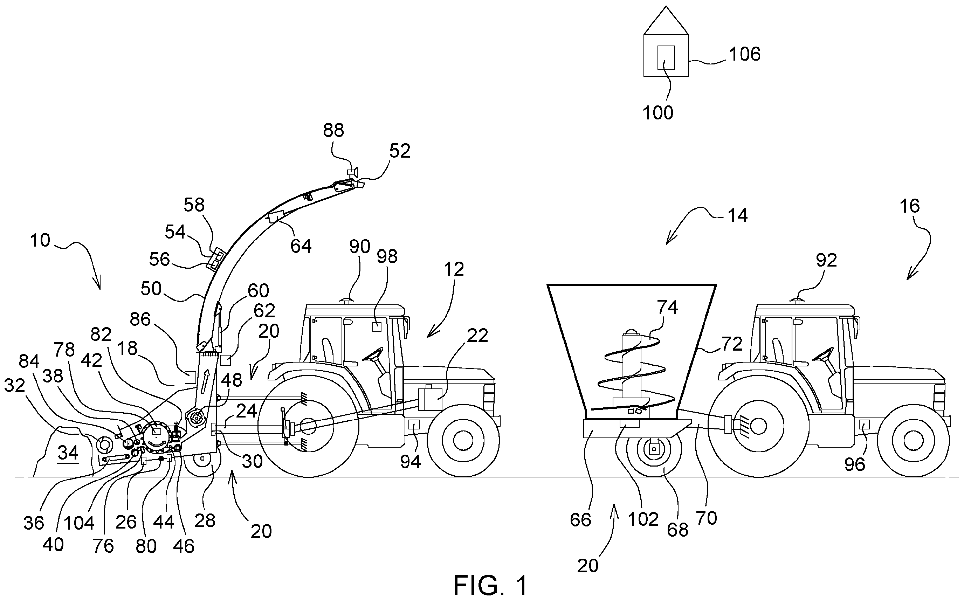

Die Figur 1 zeigt eine Anordnung 10 zur Befüllung eines Futtermischwagens 14. Die Anordnung 10 ist als Anbaugerät 18 ausgeführt, das an einer aktorisch höhenverstellbaren Dreipunktkupplung 20 eines Ackerschleppers 12 befestigt ist und mechanisch vom Verbrennungsmotor 22 des Ackerschleppers 12 über einen Antriebsstrang mit einer Zapfwelle 24 angetrieben wird. Die Anordnung 10 ist in der Figur 1 an der rückwärtigen Dreipunktkupplung 20 befestigt; sie könnte jedoch alternativ dazu an einer vorderen Dreipunktkupplung (nicht gezeigt) des Ackerschleppers 10 angebracht werden. Der Futtermischwagen 14 ist als Anhänger an die Kupplung eines weiteren Ackerschleppers 16 angehängt.

Das Gerät 18 umfasst ein tragendes Gestell 26, das sich auf Rädern 28 auf dem Boden abstützt, die als Nachlauflenkräder oder aktiv (mit der Lenkung des Ackerschleppers 12 gekoppelt) gelenkte Räder ausgeführt sein können. Die beweglichen Elemente des Geräts 18 werden von der Zapfwelle 24 über ein Getriebe 30 angetrieben. Der mechanische Antriebsstrang für die beweglichen Elemente des Geräts 18 könnte auch teilweise oder komplett durch einen elektrischen und/oder hydraulischen Antriebsstrang ersetzt werden, was auch für den Antrieb des Ackerschleppers 12 gilt, der somit auch rein elektrisch angetrieben werden könnte, sei es über eine Batterie und/oder ein Kabel.

Das Gerät 18 umfasst eine Futteraufnahmeeinrichtung 32, die konfiguriert ist, von einem Vorrat 34 Futter aufzunehmen. Die Futteraufnahmeeinrichtung 32 ist hier als Schnecke mit Reißzähnen ausgeführt, mit dem Futter aus einem Silagebehälter oder einem beliebigen anderen Vorrat 34 entnommen werden kann, könnte aber auch in beliebiger anderer Weise ausgeführt sein, z.B. als Siloschneider oder Schaufel zur portionsweisen Entnahme von Futter aus einem Vorrat 34. Ein Förderer 36, der vorliegend als Förderband ausgeführt ist, übernimmt das von der Futteraufnahmeeinrichtung 32 aufgenommene Futter und übergibt es an einen Einzugsförderer mit unteren Vorpresswalzen 38 und oberen Vorpresswalzen 40, die es vorverdichten und einer Schneideinrichtung 42 in Form einer Messertrommel mit quer zur Förderrichtung des zugeförderten Futters angeordneten oder schräg dazu angestellten Messern zuführen, welche es im Zusammenwirken mit einer Gegenschneide 86 zerkleinern. Eine Nachschneideeinrichtung 44 in Form eines Messerkamms mit längs zur Förderrichtung des Futters angeordneten Messern zerkleinert das Futter stromab der Messertrommel 42. Eine Nachzerkleinerungseinrichtung mit einem Paar von Walzen 46, zwischen denen das Futter hindurchgefördert wird, quetscht das Futter, bevor es von einem Nachbeschleuniger 48 in einen Auswurfkrümmer 50 gefördert wird, der durch Aktoren 60, 62 um eine horizontale und eine vertikale Achse drehbar ist und an dessen Ende eine durch einen Aktor 64 winkelverstellbare Auswurfklappe 52 angebracht ist. Anstelle der Walzen 46 oder zusätzlich dazu könnte auch eine Hammermühle (s. EP 1 106 047 A1) treten, oder eine beliebige andere (Nach-) Zerkleinerungs- oder Bearbeitungseinrichtung, deren Wirkung auf Reibung, Stoß, Aufprall oder dergleichen beruhen kann.

Eine Sensoranordnung 54 mit einer Kamera 56 und einem Sensor 58, bei dem es sich um einen NIR-Sensor oder einen Terahertz-Sensor oder einen beliebigen anderen Sensor, der geeignet ist, Bestandteile und/oder Inhaltsstoffe zu sensieren, handeln kann, zur Erfassung der Inhaltsstoffe des Futters ist am Auswurfkrümmer 50 angeordnet. Das Gerät 18 ähnelt, abgesehen von der Futteraufnahmeeinrichtung 32 und dem Förderer 36, einem üblichen Feldhäcksler, wozu beispielsweise auf die Offenbarung der EP 1 849 348 A1 verwiesen werden kann. Man könnte somit auch einen üblichen (selbstfahrenden oder gezogenen) Feldhäcksler als Anordnung 10 verwenden.

Der Futtermischwagen 14 ist konventionellen Aufbaus und an sich beispielsweise in der DE 20 2016 106 837 U1 oder EP 3 574 750 A1 beschrieben. Er umfasst ein tragendes Gestell 66, das sich auf Rädern 68 abstützt und über eine Deichsel 70 an den weiteren Ackerschlepper 18 angehängt ist. Auf dem Gestell 66 ist ein nach oben offener Behälter 72 befestigt, innerhalb welchem eine Mischeinrichtung 74 in Form einer um die Hochachse rotierenden, konischen Schnecke angeordnet ist, die über einen mechanischen Antriebsstrang vom weiteren Ackerschlepper 18 her antreibbar ist. Zudem umfasst der Futtermischwagen 14 Mittel zur dosierbaren Abgabe des Futters. Der weitere Ackerschlepper 18 ist ebenfalls konventionellen Aufbaus.

Das Gerät 18 umfasst eine Reihe an Aktoren zur Verstellung von Arbeitsparametern. Die Vorpresswalzen 38, 40 werden durch einen drehzahlveränderlichen Antrieb 84 angetrieben und ihre Vorspannung gegeneinander ist durch einen Aktor 76 (z.B. einen Hydraulikzylinder) variierbar. Die Schneideinrichtung 42 ist durch einen drehzahlveränderbaren Antrieb 78 antreibbar, und die Eindringtiefe der Nachschneideeinrichtung 44 in den Futterstrang ist durch einen Aktor 80 veränderbar. Ein Aktor 82 kontrolliert den Abstand zwischen den Walzen 46 der Nachzerkleinerungseinrichtung oder deren Anpressdruck. Die Betriebsparameter der in diesem Absatz erwähnten Aktoren 84, 76, 78, 80 und 82 werden durch eine Steuerung 86 kontrolliert, die auch signalübertragend mit der Sensoranordnung 54 verbunden ist.

Die Steuerung 86 kontrolliert auch die Aktoren 60, 62, 64 basieren auf den Signalen einer Kamera 88, in deren Bild die Position des Behälters 72 erkannt wird, und/oder anhand der geographischen Position des Ackerschleppers 12, die mit einer satellitensignalbasierten Positionsbestimmungseinrichtung 90 erkannt und über eine Rechnereinrichtung 94 des Ackerschleppers 12 drahtlos oder über ein Bussystem (z.B. nach ISO 11783) an die Steuerung 86 übertragen und von letzterer oder der Rechnereinrichtung 94 anhand einer sensorisch erfassten Relativposition in die Position des Geräts 18 umgerechnet wird, sowie der geographischen Position des weiteren Ackerschleppers 18, die mit einer satellitensignalbasierten Positionsbestimmungseinrichtung 92 erkannt und mittels einer Rechnereinrichtung 96 des weiteren Ackerschleppers 18 anhand einer sensorisch erfassten Relativposition in die Position des Behälters 72 umgerechnet und drahtlos an die Steuerung 86 übertragen wird. Hierzu kann auf die Vorgehensweise bei der Erntegutüberladung bei Feldhäckslern verwiesen werden, wie z.B. in DE 10 2009 027 254 A1 offenbart, wobei eine beliebige Füllstrategie verwendet und in der Nähe der Kamera 88 eine Beleuchtungseinrichtung für den Behälter 72 angebracht werden kann. Die Rechnereinrichtung 94 ist zudem mit einer Bedienerschnittstelle 98 verbunden, die sich an der Bedienerstation des Traktors 12 befindet. Es ist anzumerken, dass zumindest ein Teil der Funktionalität der Steuerung 86 an die Rechnereinrichtung 94 oder in die Cloud ausgelagert werden könnte.

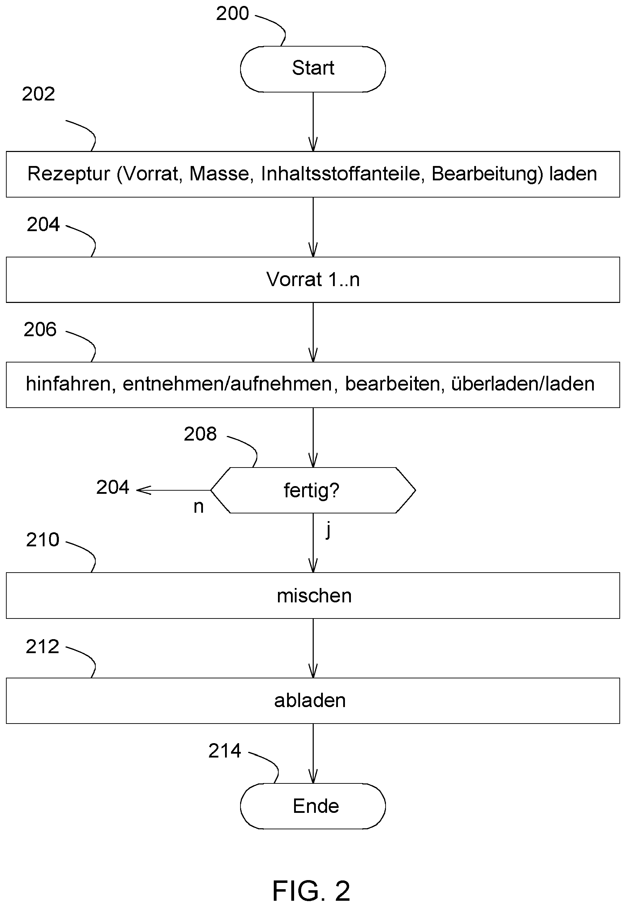

Die Figur 2 verdeutlicht die Arbeitsweise der Anordnung nach Figur 1. Nach dem Start im Schritt 200 wird im Schritt 202 von einem Server 100, der sich an einer beabstandeten Stelle 106 befinden kann, z.B. im Büro des jeweiligen landwirtschaftlichen Betriebs oder (auf einem Server 100) in der Cloud, eine Rezeptur für das jeweils zu verfütternde Futter heruntergeladen, beispielsweise auf die Steuerung 86 des Geräts 18 oder die signalübertragend damit verbundene Rechnereinrichtung 94 des Ackerschleppers 12. Die Rezeptur kann durch einen Beauftragten des landwirtschaftlichen Betriebs, oder automatisch anhand eines sensorisch erkannten Bedarfs des zu fütternden Tierbestands des Betriebs in den Server 100 eingestellt werden. Auf dem Server 100 kann ein Verwaltungsprogramm für landwirtschaftliche Betriebe verwendet werden, um Eingaben zur Optimierung der Fütterung für das Futterladesystem bereitzustellen, die auf künstlicher Intelligenz oder Maschinenlernen basieren. Die Rezeptur oder Parameter des Ladevorgangs des Futters können optional durch einen Bediener über die Bedienerschnittstelle 98 oder getrennte Eingabemittel, wie ein handgehaltenes Gerät wie ein Tablet oder Smartphone, eingeben werden. Beispiele für derartige Parameter sin die Länge des Futters, Masse, Inhaltsstoffe, ihre Einwirkung auf die Umwelt oder ein beliebiger anderer Parameter, der für die Milchvieh- und Tierhaltung zu verwalten ist. Die Kommunikation zwischen dem Server 100 und der Steuerung 86 und optional der Bedienerschnittstelle 98 kann auf eine beliebige, geeignete Weise erfolgen, beispielsweise basierend auf Protokollen zur Sprach- und/oder Datenübertragung (wie 5G, Bluetooth, WLAN, etc.). Im Falle begrenzter Erreichbarkeit können Daten auch offline übertragen werden, zum Beispiel unter Verwendung tragbarer elektronischer Speicher, wie SD-Karten oder USB-Sticks.

Diese Rezeptur kann eine Anzahl an unterschiedlichen Vorräten 34 mit unterschiedlichen Bestandteilen des Futters (wie Silage, Korn, Fertigfutter, Zusatzstoffe etc.), die zugehörige Masse und/oder Inhaltsstoffanteile und Informationen zur Bearbeitung des Futters enthalten. Es kann somit beispielsweise die Information enthalten, dass das Futter aus einem Vorrat 34 mit Silage eine Masse von 500 kg mit einem Feuchtigkeitsanteil von 28 % enthalten soll, und die Silage auf eine Länge von 10 mm geschnitten werden soll. Analoge Angaben können für beliebig viele Bestandteile des Futters, die aus unterschiedlichen Vorräten 34 zu entnehmen sind, in der Rezeptur enthalten sein. Ggf. kann auch vorgesehen sein, dass Futter aus bestimmten Vorräten 34 nicht oder nur wenig (d.h. mit großen Schnittlängen der Schneideinrichtung 42) bearbeitet wird.

Im Schritt 204 wird einer der in der Rezeptur enthaltenen Vorräte 34 ausgewählt, sei es automatisch durch die Steuerung 86 oder die Rechnereinrichtung 94 oder mittels der Bedienerschnittstelle 98, auf welcher eine Liste der Vorräte 34 angezeigt werden kann, aus dem der Bediener den jeweils nächsten Vorrat auswählen kann.

Der Bediener kann dann (Schritt 206) den Ackerschlepper 12 zum jeweiligen Vorrat 34 fahren oder dieser Vorgang erfolgt anhand bekannter Positionen der Vorräte automatisch. Im Schritt 206 wird dann die anhand der Rezeptur vorgegebene Menge des Futters aus dem jeweiligen Vorrat entnommen und der in der Rezeptur festgelegten Bearbeitung unterzogen und auf den Futtermischwagen 14, der durch einen Bediener oder eine selbsttätige Kontrolle des weiteren Ackerschleppers 18 an eine zum Überladen geeignete Stelle verbracht wurde, überladen. Hierbei werden die Aktoren 84, 76, 78, 80 und 82 durch die Steuerung 86 entsprechend der Rezeptur angesteuert. Die Rezeptur kann die Arbeitsparameter des Geräts 18 direkt vorgeben, wie die Schnittlänge, oder ein zu erreichendes Ergebnis, das mittels der Sensoranordnung 54 erfassbar sein kann. So kann die erzielte Schnittlänge mit der Kamera 54 erfasst werden, um die Geschwindigkeit der Vorpresswalzen 38, 40 und der Schneideinrichtung 42 mit den Antrieben 78 und/oder 84 im Sinne eines Erreichens einer durch die Rezeptur vorgegebenen Schnittlänge nachregeln zu können. Analog kann mit dem Sensor 58 ein Inhaltsstoffgehalt des Futters, z.B. an Protein, erfasst werden und dann, wenn eine hinreichende Menge des Futters überladen wurde, der Vorgang abgebrochen werden. Die überladene Masse des Futters kann durch einen Gewichtssensor 102 zur Erfassung der Masse des Behälters 72 erfasst und an die Steuerung 86 weitergegeben werden, oder sie wird seitens des Geräts 18 erfasst, z.B. durch Messung des Antriebsmoments eines angetriebenen Elements, wie des Nachbeschleunigers 48 oder der Vorpresswalzen 38, 40, oder sie wird durch die Kamera 56 volumetrisch erfasst. Bei einer Messung der Masse des Futters durch unterschiedliche Sensoren kann in an sich bekannter Weise ein (ungenauerer) Sensor anhand der Werte eines anderen (genaueren) Sensors kalibriert werden, eine Mittelung der Messwerte erfolgen oder bei grob abweichenden Werten eine Fehlermeldung ausgegeben werden. Die von der Rezeptur vorgegebene Bearbeitung des Futters wird demnach durch die Steuerung 86 selbsttätig durchgeführt, wobei die Rezeptur ein sensorisch erfassbares Ergebnis der Bearbeitung, wie beschrieben, oder einen Sollwert für die Betriebsparameter enthalten kann. Kurz bevor eine von der Rezeptur vorgegebene Menge des Futters in den Behälter 72 geladen wurde, kann durch die Steuerung 86 die Fördergeschwindigkeit der Futteraufnahmeeinrichtung 32 reduziert werden, um zu verhindern, dass die gewünschte Menge überschritten wird.

Im Schritt 208 wird abgefragt, ob sämtliche Vorräte 34 der Rezeptur abgearbeitet wurden. Ist das nicht der Fall, wird der Schritt 204 für den nächsten Vorrat fortgesetzt und anderenfalls folgt der Schritt 210, in dem die aufgenommenen Futtermengen im Futtermischwagen 14 durch Aktivieren des Antriebs der Mischeinrichtung 74 gemischt werden (obwohl das auch nach jedem Schritt 206 oder fortlaufend erfolgen könnte), und im Schritt 212 wird das Futter den Tieren zur Fütterung vorgelegt. Mit dem Schritt 214 endet dann das Vorgehen. Die Aktivierungsdauern des Antriebs des Futtermischers 74 können auch im Rezept definiert werden und von aktuellen Vorrat 34 abhängen, von dem das jeweilige Futter entnommen wurde, oder sie werden, wie im Stand der Technik, durch geeignete Sensoren bestimmt.

## Patentansprüche

1. Anordnung (10) zur Befüllung eines Futtermischwagens (14), mit einer Futteraufnahmeeinrichtung (32) zum Aufnehmen von Futter von einem Vorrat (34), Futterbearbeitungsmitteln zum Bearbeiten des Futters und Mitteln zum Leiten des bearbeiteten Futters in einen Behälter (72) eines Futtermischwagens (14), **dadurch gekennzeichnet, dass** der Bearbeitungsgrad der Futterbearbeitungsmittel durch eine Steuerung (86) anhand einer vorgebbaren Rezeptur kontrollierbar ist.

2. Anordnung (10) nach Anspruch 1, wobei die Rezeptur einen Arbeitsparameter der Futterbearbeitungsmittel und/oder ein zu erreichendes Ergebnis definiert, das mit einer Sensoranordnung (54) erfassbar und durch die Steuerung (86) zur Ansteuerung des Futterbearbeitungsmittels verwendbar ist.

3. Anordnung (10) nach Anspruch 2, wobei die Sensoranordnung (54) eine Kamera (56) und/oder einen Sensor (58) zur Erfassung der Inhaltsstoffe des Futters umfasst.

4. Anordnung (10) nach einem der vorherigen Ansprüche, wobei die Rezeptur Bearbeitungsparameter für unterschiedliche Vorräte (34) von Futter definiert.

5. Anordnung (10) nach Anspruch 4, wobei die Rezeptur weitere Größen des von einem jeweiligen Vorrat (34) aufzunehmenden Futter definiert, wie Inhaltsstoffe und/oder Masse.

6. Anordnung (10) nach einem der vorhergehenden Ansprüche, wobei die Futterbearbeitungsmittel eine oder mehrere folgender Einrichtungen umfassen: Vorpresswalzen (38, 40), eine Schneideinrichtung (42), eine Nachschneideeinrichtung (44) sowie eine auf beliebiger mechanische Einwirkung wie Stoß und/oder Reibung beruhende (Nach-) Bearbeitungs- oder -Zerkleinerungseinrichtung, insbesondere mit einem Paar von Walzen (46), zwischen denen das Futter hindurchgefördert wird oder mit einer Hammermühle.

7. Anordnung (10) nach einem der vorhergehenden Ansprüche, wobei die Steuerung (86) konfiguriert ist, die Fördergeschwindigkeit der Futteraufnahmeeinrichtung (32) zu vermindern, kurz bevor eine von der Rezeptur vorgegebene Menge des Futters in den Behälter (72) geladen wurde, um zu verhindern, dass die gewünschte Menge überschritten wird.

8. Anordnung (10) nach einem der vorhergehenden Ansprüche, ausgeführt als selbstfahrendes Fahrzeug mit oder ohne Behälter (72) für das Futter oder an einem Fahrzeug (12) anbringbares Gerät (18).

9. Anordnung (10) nach Anspruch 8, wobei die Steuerung (86) konfiguriert ist, die Mittel zum Leiten des bearbeiteten Futters in den Behälter (72) des Futtermischwagens (14) selbsttätig anhand der Signale einer Kamera (88) und/oder von Positionsbestimmungseinrichtungen (90, 92) anzusteuern.

10. Verfahren zur Befüllung eines Futtermischwagens (14), bei dem Futter mit einer Futteraufnahmeeinrichtung (32) von einem Vorrat (34) aufgenommen, durch Futterbearbeitungsmittel bearbeitet und in einen Behälter (72) eines Futtermischwagens (14) gefördert wird, **dadurch gekennzeichnet, dass** der Bearbeitungsgrad der Futterbearbeitungsmittel durch eine Steuerung (86) anhand einer vorgebbaren Rezeptur kontrolliert wird.
